# EUROPEAN PATENT APPLICATION

(11) **EP 4 552 745 A1**
(43) Date of publication of application: **14.05.2025**
(21) Application number: 23209158.7
(22) Date of filing: 10.11.2023
(51) Int. Cl.: B03D 1/02, B03C 1/00, C01B 25/234

(54) **METHOD FOR THE BENEFICIATION OF PHOSPHATE ORE AND SYSTEM THEREOF**

(71) Applicant: Yara International ASA, 0277 Oslo (NO)
(72) Inventor: Suhonen, Tero, 70500 Kuopio (FI); Aaltonen, Jarmo, 05800 Hyvinkää (FI)
(74) Representative: De Clercq & Partners

(57) **Abstract**

The present disclosure relates to a method for producing a phosphate concentrate from a magnesium, iron and phosphate-containing ore and comprising the step of reacting the ore with water and an amphoteric surfactant thereby providing a first concentrate containing magnesium, iron and phosphorous; separating, in a first, low gradient magnetic separation step, phosphorous from iron in the first concentrate; and collecting from the first separation step, a second concentrate comprising phosphorous and a third concentrate comprising iron. The method is characterised in that it further comprises the steps of classifying particles in the second concentrate according to a specified cut-off size; further separating, in a second, high gradient magnetic separation step, phosphorous from magnesium and iron in the classified particles with a size of less than the cut-off size; collecting, from the second separation step, a fourth concentrate comprising phosphorous and a fifth concentrate comprising magnesium and iron; and blending the particles of the second concentrate with a size equal to or higher than the cut-off size with the fourth concentrate, thereby obtaining the phosphate concentrate. The present disclosure further relates to a system for performing the method of the disclosure.

## Description

### Field of the disclosure

The present disclosure relates to the field of phosphate ore beneficiation.

### Background

Phosphate rock is an essential raw material in the production of phosphoric acid and NPK fertilisers.

Phosphoric acid can be prepared by the wet process by allowing a mineral acid, usually sulfuric acid, to react with a calcium phosphate concentrate, whereby a dilute phosphoric acid, containing approximately 30% P₂O₅, and a calcium sulphate precipitate are formed.

NPK fertilisers can be produced from phosphate rock powder either through the digestion of phosphate in nitric acid, according to the nitrophosphate process, or in sulphuric acid, and subsequent addition of nitrogen and potassium to achieve a target NPK melt than can then be particulated.

In order for the phosphate powder to be successfully processed in the phosphoric acid and NPK production, the phosphate powder should be as pure, that is as concentrated in phosphorous as possible. In addition, as much as possible of the phosphorous from the ore should be recovered in the phosphate powder.

In US6814949B1 (Kemira Chemicals Oy, 2000) it is referred to a step a) in which, after the step of froth-flotation of phosphate concentrate, the concentrate is directed to a strongly magnetic separation step in order to decrease the concentration of Mg ions. It has thus been realized that by adding a strongly magnetic separator at the end of the froth-flotation cycle, a high concentrate quality and a high yield are obtained.

The present disclosure aims at further improving the yield and the quality of the phosphate concentrate, for ores with broad ranges in composition of iron, magnesium and phosphorous minerals.

### Summary

In one aspect of the disclosure, a method for producing a phosphate concentrate is disclosed. The method comprises the steps of:
(a) reacting a magnesium, iron and phosphate-containing ore with water and an amphoteric surfactant such as to separate, through flotation, a first concentrate containing magnesium, iron and phosphorous;
(b) separating, in a first magnetic separation step, which is a low gradient magnetic separation step performed under a magnetic field of no more than 0.2 T, in particular ranging from 0.1 to 0.2 T, phosphorous from magnesium and iron in the first concentrate; and
(c) collecting from the first magnetic separation step, in a first collection step, a second concentrate comprising phosphorous and a third concentrate comprising magnesium and iron. The method is characterised in that it further comprises the steps of:
(d) classifying, in the second concentrate, particles with a size below a cut-off size and the particles with a size equal to or higher than the cut-off size, wherein the cut-off size ranges from 30 to 175 µm, or from 35 to 160 µm, or from 37 to 150 µm;
(e) separating, in a second magnetic separation step, which is a high gradient magnetic separation step performed under a magnetic field above 0.2 T, in particular ranging from 0.25 to 0.5 T, or from 0.25 to 1 T, or from 0.25 to 1.5 T, or from 0.25 to 2 T, phosphorous from magnesium and iron in the classified particles with a size of less than the cut-off size;
(f) collecting from the second, high gradient magnetic separation step, in a second collecting step, a fourth concentrate comprising phosphorous and a fifth concentrate comprising magnesium and iron; and
(g) blending the particles of the second concentrate with a size equal to or higher than the cut-off size with the fourth concentrate, thereby obtaining the phosphate concentrate.

The inventors have surprisingly found that it is possible to submit all the particles of a concentrate comprising phosphorous, magnesium and iron minerals to a first, low gradient magnetic separation step, such as to obtain a phosphorous concentrate and an iron concentrate. Furthermore, by classifying the particles in the so obtained phosphorous concentrate, such that the particles with a sizer lower than the cut-off size are further processed through an additional, high gradient magnetic field separation step, higher phosphorous recovery and a more concentrated phosphorous concentrate is obtained. Indeed, the high gradient magnetic separation step produces a phosphorous concentrate and a magnesium concentrate also containing iron, not separated from phosphorous in the first, low gradient magnetic separation step. From the combination of the phosphorous concentrates obtained from both magnetic separation steps, higher phosphorous recovery and a more concentrated phosphate concentrate is thus obtained.

In one embodiment according to the method of the disclosure, the method further comprises the steps of (h) separating, in a third magnetic separation step, which is a high gradient magnetic separation step, phosphorous from magnesium and iron in the classified particles with a size equal to or higher than the cut-off size; (i) collecting, from the third magnetic separation step, in a third collection step, a seventh concentrate comprising phosphorous and an eighth concentrate comprising magnesium and iron; and (j) blending the seventh concentrate with the fourth concentrate, thereby yielding the phosphate concentrate.

In one embodiment according to the method of the disclosure, the magnesium content is measured in the fourth and/or, optionally, the seventh concentrate phosphate concentrate and the magnetic field and, optionally, the rotation speed in the second and/or, optionally, the third magnetic separation step is respectively adjusted, such that the MgO content measured in the concentrate ranges from 0.7 to 1.1 weight%.

In one embodiment according to the method of the disclosure, in the second and/or third magnetic separation step, the generated magnetic field ranges from 0.9 to 1.1 T.

In one embodiment according to the method of the disclosure, in the first, second and/or third magnetic separation step, the corresponding concentrate flows in the separator at a flow ranging from 150 to 250 m³/h.

In one embodiment according to the method of the disclosure, the first, second and/or third magnetic separation step is performed in a magnetic separator, which rotates at a speed ranging from 50 to 160 mm/s.

In one embodiment according to the method of the disclosure, the magnesium, iron and phosphate-containing ore comprises from 3.0 to 8.0 weight% P₂O₅, from 5.0 to 19.0 weight% MgO and from 6.0 to 15.0 weight% Fe₂O₃, particularly wherein the magnesium, iron and phosphate-containing ore comprises from 5.0 to 8.0 weight% P₂O₅, from 5.0 to 8.0 weight% MgO and from 10.0 to 15.0 weight% Fe₂O₃.

In one embodiment according to the method of the disclosure, the reacting step further comprises the use of an emulsifier, particularly wherein the reacting step is performed with a fatty acid as the amphoteric surfactant and an ethoxylated alcohol as the emulsifier.

In one embodiment according to the method of the disclosure, the reacting step is performed using 400 to 600 g of the surfactant per ton of ore.

In one embodiment according to the method of the disclosure, the temperature in the reacting step ranges from 20 to 25 °C, and/or wherein the pH in the reacting step ranges from pH 8 to pH 9.

In one aspect of the disclosure, a system for producing a phosphate concentrate is disclosed. The system is suitable for performing the method of the disclosure and comprises:
* a reactor for reacting a magnesium, iron and phosphate-containing ore with water and an amphoteric surfactant such as to separate, through flotation, the first concentrate containing magnesium, iron and phosphorous;
* a first magnetic separator, configured for low and optionally high gradient magnetic separation, downstream of the reactor, for separating, under a low magnetic gradient, the phosphorous from both the magnesium and iron in the first concentrate;
* a first collector for collecting, from the first magnetic separator, the second concentrate comprising phosphorous and magnesium and the third concentrate comprising iron;
* a classifier, downstream of the first collector, for classifying particles in the second concentrate having a size of less than the cut-off size and particles having a size equal to or higher than the cut-off size;
* a second magnetic separator, configured for high gradient magnetic separation, downstream of the classifier, for separating, under a high magnetic gradient, the phosphorous from both the magnesium and iron in the classified particles with a size of less than the cut-off size;
* a second collector for collecting, from the second magnetic separator, the fourth concentrate comprising phosphorous and the fifth concentrate comprising magnesium and iron; and
* a blending unit for blending the fourth concentrate with the classified particles with a size equal to or higher than the cut-off size.

In one embodiment according to the system of the disclosure, the system further comprises:
* a third magnetic separator, configured for high gradient magnetic separation, downstream of the classifier, for separating, under a high magnetic gradient, the phosphorous from both the magnesium and iron in the classified particles with a size equal to or higher than the cut-off size; and
* a third collector, for collecting, from the third magnetic separator, the seventh concentrate comprising phosphorous and the eighth concentrate comprising magnesium and iron,
wherein the blending unit is for blending the fourth concentrate and the seventh concentrate.

In one embodiment according to the system of the disclosure, the first magnetic separator is configured for both low and high magnetic separation, the first and the second and/or the third magnetic separator are the same magnetic separator, the system further comprises means to transfer the classified particles with a size lower than the cut-off size to the first magnetic separator, and, optionally, the system further comprises means to transfer the classified particles with a size equal to or higher than the cut-off size to the first separator; and/or the second and/or, optionally, the third collectors are the same collector.

In one embodiment according to the system of the disclosure, the system further comprises a control loop comprising an analyser adapted to analyse the magnesium content in the fourth and/or, optionally, the seventh concentrate phosphate concentrate downstream the second and/or the third magnetic separator respectively, and the results of the analyser is used in a control loop for adjusting the magnetic field in the second and/or, optionally, the third magnetic separator.

In one aspect of the disclosure, the use of the system of the disclosure for performing the method of the disclosure is disclosed.

### List of Figures

Figure 1 depicts a schematic representation of an embodiment of the system of the present disclosure.
Figure 2 depicts a schematic representation ofr an embodiment of the system of the present disclosure.

### List of reference numbers/signs used in the figures

- 1: reactor
- 2: first magnetic separator
- 3: first collector
- 4: classifier
- 5: second magnetic separator
- 6: second collector
- 7: blending unit
- 8: third magnetic separator
- 9: third collector
- C1: first concentrate
- C2: second concentrate
- C3: third concentrate
- C4: fourth concentrate
- C5: fifth concentrate
- C6: sixth concentrate
- C7: seventh concentrate
- C8: eighth concentrate

### Description

Throughout the description and claims of this specification, the words "comprise" and variations thereof mean "including but not limited to", and they are not intended to (and do not) exclude other moieties, additives, components, integers or steps. Throughout the description and claims of this disclosure, the singular encompasses the plural unless the context otherwise requires. In particular, where the indefinite article is used, the disclosure is to be understood as contemplating plurality as well as singularity, unless the context requires otherwise.

Features, integers, characteristics, compounds, chemical moieties, or groups described in conjunction with a particular aspect, embodiment or example of the disclosure are to be understood to be applicable to any other aspect, embodiment or example described herein unless incompatible therewith. All of the features disclosed in this disclosure (including the description, claims, abstract and drawing), and/or all of the steps of any method or process so disclosed, may be combined in any combination, except combinations where at least some of such features and/or steps are mutually exclusive. The disclosure is not restricted to the details of any foregoing embodiments. The disclosure extends to any novel one, or any novel combination, of the features disclosed in this disclosure (including the description, claims, abstract and drawing), or to any novel one, or any novel combination, of the steps of any method or process so disclosed.

The enumeration of numeric values by means of ranges of figures comprises all values and fractions in these ranges, as well as the cited end points. The terms "ranging from ... to ..." or "range from ... to ..." or "up to" as used when referring to a range for a measurable value, such as a parameter, an amount, a time period, and the like, is intended to include the limits associated to the range that is disclosed.

Throughout the disclosure, the concentrations in phosphorous, magnesium and iron are conveniently expressed as concentrations in P₂O₅, MgO and Fe₂O₃ respectively.

In one aspect of the disclosure, a method for producing a phosphate concentrate is disclosed. The method comprises the steps of:
(a) reacting a magnesium, iron and phosphate-containing ore with water and an amphoteric surfactant such as to separate, through flotation, a first concentrate containing magnesium, iron and phosphorous;
(b) separating, in a first magnetic separation step, which is a low gradient magnetic separation step performed under a magnetic field of no more than 0.2 T, in particular ranging from 0.1 to 0.2 T, phosphorous from magnesium and iron in the first concentrate; and
(c) collecting from the first magnetic separation step, in a first collection step, a second concentrate comprising phosphorous and a third concentrate comprising magnesium and iron.

The method is characterised in that it further comprises the steps of:
(d) classifying, in the second concentrate, particles with a size below a cut-off size and the particles with a size equal to or higher than the cut-off size, wherein the cut-off size ranges from 30 to 175 µm, or from 35 to 160 µm, or from 37 to 150 µm;
(e) separating, in a second magnetic separation step, which is a high gradient magnetic separation step performed under a magnetic field above 0.2 T, in particular ranging from 0.25 to 0.5 T, or from 0.25 to 1 T, or from 0.25 to 1.5 T, or from 0.25 to 2 T, phosphorous from magnesium and iron in the classified particles with a size of less than the cut-off size;
(f) collecting from the second, high gradient magnetic separation step, in a second collecting step, a fourth concentrate comprising phosphorous and a fifth concentrate comprising magnesium and iron; and
(g) blending the particles of the second concentrate with a size equal to or higher than the cut-off size with the fourth concentrate, thereby obtaining the phosphate concentrate.

In particular the ore comprises phosphorous, iron and magnesium in the form of phosphate containing, iron containing and magnesium containing minerals, respectively.

The person skilled in the art is capable of assessing the optimal cut-off size depending upon the ore he/she is treating for producing the phosphate concentrate. That is, depending on the composition of the ore starting material, the person skilled in the art can routinely establish the cut-off size in the classification step such that optimal second and third concentrates are obtained, which means that, at fixed parameters for the high gradient magnetic separation step, the second, high gradient magnetic separation step produces a fourth concentrate most concentrated in phosphorous, and the sixth concentrate, i.e. the final phosphate concentrate, provides maximum phosphorous recovery from the ore starting material. In particular, the cut-off size ranges from 30 to 175 µm. More in particular, the cut-off size ranges from 35 to 160 µm. Even more in particular, the cut-off size ranges from 37 to 150 µm.

The inventors have surprisingly found that it is possible to submit all the particles of a concentrate comprising phosphorous, magnesium and iron minerals to a first, low gradient magnetic separation step, such as to obtain a phosphorous concentrate and an iron concentrate. Furthermore, by classifying the particles in the so obtained phosphorous concentrate, such that the particles with a sizer lower than the cut-off size are further processed through an additional, high gradient magnetic field separation step, higher phosphorous recovery and a more concentrated phosphorous concentrate is obtained. Indeed, the high gradient magnetic separation step produces a phosphorous containing concentrate and a magnesium containing concentrate also containing iron, not separated from phosphorous in the first, low gradient magnetic separation step. From the combination of the phosphorous concentrates obtained from both magnetic separation steps, higher phosphorous recovery and a more concentrated phosphorous concentrate is thus obtained.

In the mining industry or extractive metallurgy, beneficiation is any process that improves (benefits) the economic value of the ore by removing the gangue minerals, which results in a higher-grade product (ore concentrate) and a waste stream (tailings). There are many different types of beneficiation, with each step furthering the concentration of the original ore. The beneficiation process can comprise the three following steps: disaggregation, physical separation and chemical separation.

Beneficiation can begin within the mine itself with a disaggregation step. Most mines will have a crusher within the mine itself where separation of ore and gangue minerals occurs and as a side effect becomes easier to transport. After the crusher, the ore will go through a grinder or a mill to get the ore into fine particles. Dense media separation (DMS) is used to further separate the desired ore from rocks and gangue minerals. This will stratify the crushed aggregate by density making separation easier. Where the DMS that occurs in the process can be important, the grinders or mills will process much less waste rock if the DMS occurs beforehand. This will lower wear on the equipment as well as operating costs since there is a lower volume being put through.

Following a disaggregation step and during a physical separation step, the ore can be further separated from the rock. One way this can be achieved is by using the physical properties of the ore to separate it from the rest of the rock. These processes are gravity separation, flotation, and magnetic separation. Gravity separation uses centrifugal forces and specific gravity of ores and gangue to separate them. Magnetic separation is used to separate magnetic gangue from the desired ore, or conversely to remove a magnetic target ore from nonmagnetic gangue. DMS is also considered a physical separation.

In the present disclosure, physical separation is performed by magnetic separation. Magnetic separation is the process of separating components of mixtures by using a magnet to attract magnetic substances. The process that is used for magnetic separation separates non-magnetic substances from those which are magnetic. This technique is useful for the select few minerals which are ferromagnetic (iron-, nickel-, and cobalt-containing minerals) and paramagnetic (such as magnesium). Ferromagnetism is a property of certain materials (such as iron) that results in a significant, observable magnetic permeability, and in many cases, a significant magnetic coercivity, that is an ability to withstand an external magnetic field without becoming demagnetized, thereby allowing the material to form a permanent magnet. Paramagnetism is a form of magnetism whereby some materials are weakly attracted by an externally applied magnetic field, and form internal, induced magnetic fields in the direction of the applied magnetic field. Due to the presence of unpaired electrons in the material, the spin of unpaired electrons has a magnetic dipole moment and act like tiny magnets. An external magnetic field causes the electrons' spins to align parallel to the field, causing a net attraction.

A large diversity of mechanical means can be used to separate magnetic materials. In particular embodiments, during magnetic separation, magnets are situated inside two separator drums which bear steel coils and liquids such as water. Due to the magnets, magnetic particles are being drifted by the movement of the drums. The current is passed through the coil, which creates a magnetic field, which magnetizes the expanded steel matrix ring. The magnetic matrix material behaves like a magnet in the magnetic field and thereby attracts the magnetic particles. The ring is rinsed when it is in the magnetic field and all the non-magnetic particles are carried with the rinse water. Next as the ring leaves the magnetic zone the ring is flushed and a vacuum of about - 0.3 bar is applied to remove the magnetic particles attached to the matrix ring. This can create a concentrate (e.g. an ore concentrate) and, therefore, result in the separation of a non-magnetic concentrate such as a phosphate concentrate from a magnetic concentrate, such as an iron concentrate.

Magnetic separators that use permanent magnets can generate fields of low intensity only, that is a low-intensity field gradient. In contrast, high intensity magnetic separators generate a field of high magnetic intensity. Low magnetic separation can work well in removing ferrous but not fine paramagnetic particles. On the other end, high-intensity magnetic separators can be effective in collecting paramagnetic particles and focus on the separation of very fine particles that are paramagnetic. US6814949B1 teaches that for ores comprising phosphorous, iron and magnesium minerals, all particles of the ore are to be treated together in a single, high gradient magnetic separation step.

However, and surprisingly in view of US6814949B1, the inventors have surprisingly found that it is possible to submit all the particles of a concentrate comprising phosphorous, magnesium and iron minerals to a first, low gradient magnetic separation step, such as to obtain a phosphorous concentrate and an iron concentrate. Furthermore, by classifying the particles in the so obtained phosphorous concentrate, such that the particles with a sizer lower than a specified cut-off size are further processed via an additional, high gradient magnetic field separation step, higher phosphorous recovery and a more concentrated phosphate concentrate is obtained. Optionally, the classified particles with a size equal to or larger than the specified cut-off size may also be further processed via a high gradient magnetic field separation step. Indeed, the high gradient magnetic separation step produces a phosphorous concentrate and a magnesium concentrate also containing iron, not separated from phosphorous in the first, low gradient magnetic separation step. From the combination of the phosphorous concentrates obtained from both magnetic separation steps, higher phosphorous recovery and a more concentrated phosphate concentrate is thus obtained.

In the present disclosure however, the ore physical properties cannot be relied on for separation, therefore a further chemical process, that is a reacting flotation step, is performed before the magnetic separation to separate the ores from the rock. Indeed, the present disclosure uses a flotation step before the magnetic separation step. Froth flotation uses hydrophobic and hydrophilic properties to separate the ore from the gangue. Hydrophobic particles will rise to the top of the solution to be skimmed off. Changes to pH in the solution can influence what particles will be hydrophilic. One way to achieve the separation of the desired ores from the rock is indeed to render the ores more hydrophobic than the rock particles such that selective precipitation of the desired ores particles is achieved. Alternatively, the desired ores particles can be rendered more hydrophilic than the rock particles, such that the undesired solids are precipitated and that the desired ores are recovered after evaporation of the water solution. The difference in the hydrophobicity or hydrophilicity of the ores and the rock particles can be achieved through the use of a chemical aggregating selectively to the ores or the rock particles.

The selection of the proper chemical for flotation, along with the correspondingly proper temperature and pH, results in improved separation of the ores particles from the rock particles. In the present disclosure, it is made use of an amphoteric surfactant. By amphoteric surfactant, it is meant a molecule that carry both a positive and a negative charge, the charge being either permanent or pH dependent, thereby increasing the flexibility for the interaction with the hydrophobic particles to be precipitated.

In one embodiment according to the method of the disclosure, the method comprises the steps of:
(a) reacting a magnesium, iron and phosphate-containing ore with water and an amphoteric surfactant such as to separate, through flotation, a first concentrate containing magnesium, iron and phosphorous;
(b) separating, in a first magnetic separation step, which is a low gradient magnetic separation step performed under a magnetic field of no more than 0.2 T, in particular ranging from 0.1 to 0.2 T, phosphorous from magnesium and iron in the first concentrate; and
(c) collecting from the first magnetic separation step, in a first collection step, a second concentrate comprising phosphorous and a third concentrate comprising magnesium and iron. The method is characterised in that it further comprises the steps of:
(d) classifying, in the second concentrate, particles with a size below a cut-off size and the particles with a size equal to or higher than the cut-off size, wherein the cut-off size ranges from 30 to 175 µm, or from 35 to 160 µm, or from 37 to 150 µm;
(e) separating, in a second magnetic separation step, which is a high gradient magnetic separation step performed under a magnetic field above 0.2 T, in particular ranging from 0.25 to 0.5 T, or from 0.25 to 1 T, or from 0.25 to 1.5 T, or from 0.25 to 2 T, phosphorous from magnesium and iron in the classified particles with a size of less than the cut-off size;
(f) collecting from the second, high gradient magnetic separation step, in a second collecting step, a fourth concentrate comprising phosphorous and a fifth concentrate comprising magnesium and iron;
(h) separating, in a third magnetic separation step, which is a high gradient magnetic separation step, phosphorous from magnesium and iron in the classified particles with a size equal to or higher than the cut-off size;
(i) collecting, from the third magnetic separation step, in a third collection step, a seventh concentrate comprising phosphorous and an eighth concentrate comprising magnesium and iron; and
(j) blending the seventh concentrate with the fourth concentrate, thereby yielding the phosphate concentrate.

By treating separately the fine particles and the larger particles - with respect to a specified cut-off size, as separated according to the classification step, in a separator with a high gradient magnetic field, and subsequently combining the phosphorous concentrates obtained from each high gradient magnetic field separation step, a more concentrated phosphorous concentrate is obtained, compared to when only the fine particles are treated through a high gradient magnetic separation step.

In one embodiment according to the method of the disclosure, the magnesium content is measured in the fourth and/or, optionally, the seventh concentrate phosphate concentrate and the magnetic field and, optionally, the rotation speed in the second and/or, optionally, the third magnetic separation step is respectively adjusted, such that the MgO content measured in the concentrate ranges from 0.7 to 1.1 weight%.

The concentration in magnesium in the fourth and, optionally, seventh concentrate can indeed be used in order to improve the separation of phosphorous from magnesium in the second and, optionally, third magnetic separation steps, by adjusting, as recommended from the measured levels of magnesium, the magnetic field and the rotation speed.

In one embodiment according to the method of the disclosure, in the second and/or third magnetic separation step, the generated magnetic field ranges from 0.9 to 1.1 T in the second and/or third magnetic separation step, the generated magnetic field ranges from 0.9 to 1.1 T. When the magnetic field is within this range, the separation of phosphorous during the magnetic separation is improved.

In one embodiment according to the method of the disclosure, in the first, second and/or third magnetic separation step, the corresponding concentrate flows in the separator at a flow ranging from 150 to 250 m³/h.

At such flow to the magnetic separator, the concentration of the ores and their residence time inside the separator result in an improved separation of phosphorous during the magnetic separation.

In one embodiment according to the method of the disclosure, the first, second and/or third magnetic separation step is performed in a magnetic separator, which rotates at a speed ranging from 50 to 160 mm/s.

At such rotation speed inside the magnetic separator, the residence time of the ores inside the separator results in an improved separation of phosphorous during the magnetic separation.

In one embodiment according to the method of the disclosure, the magnesium, iron and phosphate-containing ore comprises from 3.0 to 8.0 weight% P₂O₅, from 5.0 to 19.0 weight% MgO and from 6.0 to 15.0 weight% Fe₂O₃, particularly wherein the magnesium, iron and phosphate-containing ore comprises from 5.0 to 8.0 weight% P₂O₅, from 5.0 to 8.0 weight% MgO and from 10.0 to 15.0 weight% Fe₂O₃.

The method of the disclosure has been found to result in particularly satisfactory phosphorous recovery and concentration in phosphorous of the produced phosphorous concentrate, when the ore starting material comprises such phosphorous, magnesium and iron concentrations.

In one embodiment according to the method of the disclosure, the reacting step further comprises the use of an emulsifier, particularly wherein the reacting step is performed with a fatty acid as the amphoteric surfactant and an ethoxylated alcohol as the emulsifier. Through the use of an emulsifier, the precipitated particles are stabilised and rendered more homogenous as they do not come together and do not coalesce. Further, the combination of a fatty acid as the surfactant along with an ethoxylated alcohol emulsifier was found to improve the reaction in the reaction, flotation step.

In one embodiment according to the method of the disclosure, the reacting step is performed using 400 to 600 g of the surfactant per ton of ore.

The reacting, flotation step has been found to necessitate an appropriate amount of the surfactant for successfully separating, in the reacting step, the ore particles to be treated in the separating step. Once the addition of additional surfactant results in a stable, that is varying by no more than 5 %, preferably 2 %, even more preferably 1% in ore separation, then it can be concluded that the correct amount of surfactant is being used.

In one embodiment according to the method of the disclosure, the temperature in the reacting step ranges from 20 to 25 °C, and/or wherein the pH in the reacting step ranges from pH 8 to pH 9.

The combination of a temperature range of 20 to 25 °C, and/or a pH of 8 to 9 was found to improve the reaction in the reacting, flotation step. NaOH, Na₂CO₃ or Na₂CO₃ may all be used in or order to achieve the pH control in the reaction, flotation step.

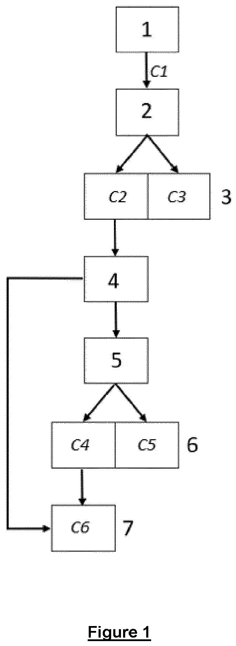

Reference is made to Figure 1. In one aspect of the disclosure, a system for producing a phosphate concentrate is disclosed. The system is suitable for performing the method of the disclosure and comprises:
* a reactor for reacting a magnesium, iron and phosphate-containing ore with water and an amphoteric surfactant such as to separate, through flotation, the first concentrate containing magnesium, iron and phosphorous;
* a first magnetic separator, configured for low and optionally high gradient magnetic separation, downstream of the reactor, for separating, under a low magnetic gradient, the phosphorous from particularly the iron and optionally some magnesium in the first concentrate;
* a first collector or collecting means, for collecting, from the first magnetic separator, the second concentrate comprising phosphorous and magnesium and the third concentrate comprising iron;
* a classifier, downstream of the first collector or collecting means, for classifying particles in the second concentrate having a size of less than a specified cut-off size and particles having a size equal to or higher than the cut-off size;
* a second magnetic separator, configured for high gradient magnetic separation, downstream of the classifier, for separating, under a high magnetic gradient, the phosphorous from both the magnesium and iron in the classified particles with a size of less than the cut-off size;
* a second collector or collecting means, for collecting, from the second magnetic separator, the fourth concentrate comprising phosphorous and the fifth concentrate comprising magnesium and iron; and
* a blending unit, particularly for blending the fourth concentrate with the classified particles with a size equal to or higher than the cut-off size.

The system of the disclosure is suitable for performing the method of the disclosure. Therefore, the system of the disclosure comprises all the necessary elements for performing the reaction, separation and collection steps.

In particular, and considering the above mentioned benefits of treating separately the particles with a size of less than the cut-off size in a further, high magnetic gradient separation step, the system comprises a classifier for classifying particles in the second concentrate, according to the specified cut-off size. Further, the system comprises a magnetic separator suitable for low gradient magnetic separation and a magnetic separator suitable for high gradient magnetic separation. Also, the system comprises a collector for collecting separately the second and third concentrates provided by the first, low gradient magnetic separation step, as well as a collector for collecting separately the fourth and fifth concentrates provided by the second, high gradient magnetic separation step. In addition, the system comprises a blending unit for blending the fourth concentrates with the particles from the second concentrate having been classified as having a size equal to or higher than the cut-off size.

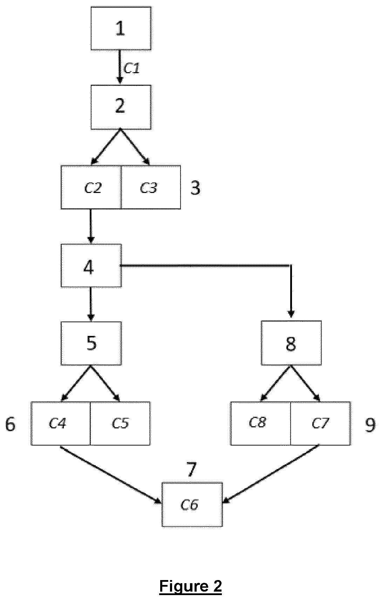

Reference is further made to Figure 2. In one embodiment according to the system of the disclosure, the system further comprises a third magnetic separator, configured for high gradient magnetic separation, downstream of the classifier, for separating, under a high magnetic gradient, the phosphorous from both the magnesium and iron in the classified particles with a size equal to or higher than the cut-off size; and a third collector, for collecting, from the third magnetic separator, the seventh concentrate comprising phosphorous and the eighth concentrate comprising magnesium and iron, wherein the blending unit is for blending the fourth concentrate and the seventh concentrate.

The system can be equipped to perform a high gradient magnetic, third separation step on the coarser, as classified by the classifier, particles obtained from the classification step. Further, the system is then equipped also with a collector for collecting the seventh and eighth concentrates provided by the third magnetic separation step.

In one embodiment according to the system of the disclosure, the first magnetic separator is configured for both low and high magnetic separation, the first and the second and/or the third magnetic separator are the same magnetic separator, the system further comprises means to transfer the classified particles with a size lower than the cut-off size to the first magnetic separator, and, optionally, the system further comprises means to transfer the classified particles with a size equal to or higher than the cut-off size to the first separator; and/or the second and/or, optionally, the third collectors are the same collector.

If the magnetic separator used for the first magnetic separation step is suitable for both low and high gradient magnetic separation, then the same magnetic separator can be used for performing, separately, all of the first, second and third magnetic separation steps. Also, if the collector used for collecting separately the second and third concentrates is suitable for also collecting the fourth and fifth, and the seventh and eighth concentrates separately, then the same collector can be used separately for performing the first, second and third collection steps.

In one embodiment according to the system of the disclosure, the system further comprises a control loop comprising an analyser adapted to analyse the magnesium content in the fourth and/or, optionally, the seventh concentrate phosphate concentrate downstream the second and/or the third magnetic separator respectively, and the results of the analyser is used in a control loop for adjusting the magnetic field in the second and/or, optionally, the third magnetic separator.

Considering the above-mentioned benefits of determining the magnesium concentration in the fourth and, optionally, seventh, concentrate, the system further comprises an analyser for the magnesium content in these concentrates, as well as a control loop such that the magnetic field in the second and, optionally, third magnetic separator is adjusted, in order to produce a fourth and, optionally, seventh concentrate with a magnesium content below a set limit.

In one aspect of the disclosure, the use of the system of the disclosure for performing the method of the disclosure is disclosed.

### Example

Reference is made to Figure 1. In a first and flotation step, 500 g of an ore comprising 6.4 weight% P₂O₅, 7.1 weight% MgO, 11.4 weight% Fe₂O₃ was reacted in a reactor (1) with water and the compound Atrac 1563 from Nouryon, comprising 50-100% tall oil ester of maleic acid, a fatty acid and 1-5% of maleic anhydride, at 21 °C and a pH of 8.7 for 45 minutes. A first concentrate (C1) comprising 28.3 weight% P₂O₅, 2.2 weight% MgO, 1.5 weight% Fe₂O₃ was thereby obtained. The first concentrate (C1) was submitted to a low gradient, first, magnetic separation step in a first magnetic separator (2). In this low gradient magnetic separation step, the magnetic field was set to 0.2 T, the rotation speed was set to 110 mm/s and the flow of the concentrate in the magnetic separator was set to 200 m³/h. A second concentrate (C2) was collected at the bottom of the magnetic separator in a first collector (3) and a third concentrate (C3) was flushed from the magnet inside the first magnetic separator (2) and collected separately, also in the first collector (3). A classification step then was performed on the second concentrate (C2) in a classifier (4) such as to classify the particles with a size smaller than 37 µm. Those classified particles were submitted to a high gradient, second magnetic separation step in a second magnetic separator (5). In this high gradient magnetic separation step, the magnetic field was set to 0.25 T, the rotation speed was set to 110 mm/s and the flow of the concentrate in the magnetic separator was set to 200 m³/h. A fourth concentrate (C4) was collected, in a second collector (6) at the bottom of the second magnetic separator (5) and comprised 35.4 weight% P₂O₅, 0.9 weight% MgO, 0.4 weight% Fe₂O3, and a fifth concentrate (C5) comprising 25.5 weight% P₂O₅, 4.1 weight% MgO, 3.9 weight% Fe₂O₃ was flushed from the magnet inside the second magnetic separator (5) and collected separately, also in the second collector (6). The particles with a size of 37 µm or higher were separately submitted to a high gradient, third magnetic separation step, in a third magnetic separator (8). In this latter high gradient magnetic separation step, the magnetic field was set to 0.5 T, the rotation speed was set to 110 mm/s and the flow of the concentrate in the magnetic separator was set to 200 m³/h. A seventh concentrate (C7) was collected, in a third collector (9), at the bottom of the third magnetic separator (8) and comprised 33.3 weight% P₂O₅, 0.8 weight% MgO, 0.4 weight% Fe₂O₃, and an eighth concentrate (C8) comprising 17.1 weight% P₂O₅, 4.3 weight% MgO, 3.0 weight% Fe₂O₃ was flushed from the magnet inside the third magnetic separator (9) and collected separately, also in the third collector (9). The fourth (C4) and seventh (C7) concentrates were blended in a blending unit (7), thereby yielding a sixth concentrate comprising 34.4 weight% P2O5, 0.8 weight% MgO, 0.4 weight% Fe2O3, referred here to as the final P- concentrate (C6). The P-recovery from the ore in the P-concentrate was calculated to be 65.7%. The magnesium concentration in the fourth (C2) and seventh (C4) concentrates were measured, in order to optimise, if required, the strength of the magnetic field, the rotation speed in the magnetic separator and the flow of the concentrate, in the corresponding second and third high gradient field magnetic separation steps providing these concentrates. When the classification step was not performed and the high gradient magnetic separation was not performed on the non-classified particles, the concentration in P₂O₅ in the corresponding P- concentrate produced was 32.9% and the amount of P₂O₅ recovered was 65.5%.

Improved concentration in P₂O₅ and P- recovery from the ore in the P- concentrate were also found to be improved when the magnetic field in the second and third magnetic separation steps ranged from 0.9 to 1.1 T.

## Claims

1. A method for producing a phosphate concentrate comprising the steps of:
(a) reacting a magnesium, iron and phosphate-containing ore with water and an amphoteric surfactant to separate, through flotation, a first concentrate containing magnesium, iron and phosphorous;
(b) separating, in a first magnetic separation step, which is a low gradient magnetic separation step performed under a magnetic field of no more than 0.2 T, in particular ranging from 0.1 to 0.2 T, phosphorous from magnesium and iron in the first concentrate; and
(c) collecting from the first magnetic separation step, in a first collection step, a second concentrate comprising phosphorous and a third concentrate comprising magnesium and iron; wherein, the method further comprises the steps of:
(d) classifying, in the second concentrate, particles with a size below a cut-off size and the particles with a size equal to or higher than the cut-off size, wherein the cut-off size ranges from 30 to 175 µm, or from 35 to 160 µm, or from 37 to 150 µm;
(e) separating, in a second magnetic separation step, which is a high gradient magnetic separation step performed under a magnetic field above 0.2 T, in particular ranging from 0.25 to 0.5 T, or from 0.25 to 1 T, or from 0.25 to 1.5 T, or from 0.25 to 2 T, phosphorous from magnesium and iron in the classified particles with a size of less than the cut-off size;
(f) collecting from the second, high gradient magnetic separation step, in a second collecting step, a fourth concentrate comprising phosphorous and a fifth concentrate comprising magnesium and iron; and
(g) blending the particles of the second concentrate with a size equal to or higher than the cut-off size with the fourth concentrate, thereby obtaining the phosphate concentrate.

2. The method according to claim 1, further comprising the steps of:
(h) separating, in a third magnetic separation step, which is a high gradient magnetic separation step, phosphorous from magnesium and iron in the classified particles with a size equal to or higher than the cut-off size;
(i) collecting, from the third magnetic separation step, in a third collection step, a seventh concentrate comprising phosphorous and an eighth concentrate comprising magnesium and iron; and
(j) blending the seventh concentrate with the fourth concentrate, thereby yielding the phosphate concentrate.

3. The method according to claim 1 or 2, wherein, the magnesium content is measured in the fourth and/or, optionally, the seventh concentrate phosphate concentrate and the magnetic field and, optionally, the rotation speed in the second and/or, optionally, the third magnetic separation step is respectively adjusted, such that the MgO content measured in the concentrate ranges from 0.7 to 1.1 weight%.

4. The method according to any one of claims 1 to 3, wherein in the second and/or third magnetic separation step, the generated magnetic field ranges from 0.9 to 1.1 T.

5. The method according to any one of claims 1 to 4, wherein, in the first, second and/or third magnetic separation step, the corresponding concentrate flows in the separator at a flow ranging from 150 to 250 m³/h.

6. The method according to any one of claims 1 to 5, wherein the first, second and/or third magnetic separation step is performed in a magnetic separator, which rotates at a speed ranging from 50 to 160 mm/s.

7. The method according to any one of claims 1 to 6, wherein the magnesium, iron and phosphate-containing ore comprises from 3.0 to 8.0 weight% P₂O₅, from 5.0 to 19.0 weight% MgO and from 6.0 to 15.0 weight% Fe₂O₃, particularly wherein the magnesium, iron and phosphate-containing ore comprises from 5.0 to 8.0 weight% P₂O₅, from 5.0 to 8.0 weight% MgO and from 10.0 to 15.0 weight% Fe₂O₃.

8. The method according to any one of claims 1 to 7, wherein the reacting step further comprises the use of an emulsifier, particularly wherein the reacting step is performed with a fatty acid as the amphoteric surfactant and an ethoxylated alcohol as the emulsifier.

9. The method according to claim 8, wherein the reacting step is performed using 400 to 600 g of the surfactant per ton of ore.

10. The method according to any one of claims 1 to 9, wherein the temperature in the reacting step ranges from 20 to 25 °C, and/or wherein the pH in the reacting step ranges from pH 8 to pH 9.

11. A system for producing a phosphate concentrate and suitable for performing the method according to any one of claims 1 to 10, comprising:
* a reactor for reacting a magnesium, iron and phosphate-containing ore with water and an amphoteric surfactant such as to separate, through flotation, the first concentrate containing magnesium, iron and phosphorous;
* a first magnetic separator, configured for low and optionally high gradient magnetic separation, downstream of the reactor, for separating, under a low magnetic gradient, the phosphorous from both the magnesium and iron in the first concentrate;
* a first collector for collecting, from the first magnetic separator, the second concentrate comprising phosphorous and magnesium and the third concentrate comprising iron;
* a classifier, downstream of the first collector, for classifying particles in the second concentrate having a size of less than the cut-off size and particles having a size equal to or higher than the cut-off size;
* a second magnetic separator, configured for high gradient magnetic separation, downstream of the classifier, for separating, under a high magnetic gradient, the phosphorous from both the magnesium and iron in the classified particles with a size of less than the cut-off size;
* a second collector for collecting, from the second magnetic separator, the fourth concentrate comprising phosphorous and the fifth concentrate comprising magnesium and iron; and
* a blending unit for blending the fourth concentrate with the classified particles with a size equal to or higher than the cut-off size.

12. The system according to claim 11, further comprising:
* a third magnetic separator, configured for high gradient magnetic separation, downstream of the classifier, for separating, under a high magnetic gradient, the phosphorous from both the magnesium and iron in the classified particles with a size equal to or higher than the cut-off size; and
* a third collector, for collecting, from the third magnetic separator, the seventh concentrate comprising phosphorous and the eighth concentrate comprising magnesium and iron, wherein the blending unit is for blending the fourth concentrate and the seventh concentrate.

13. The system according to claim 11 or 12, wherein:
* the first magnetic separator is configured for both low and high magnetic separation, wherein the first and the second and/or the third magnetic separator are the same magnetic separator, wherein the system further comprising means to transfer the classified particles with a size lower than the cut-off size to the first magnetic separator, and, optionally, wherein the system further comprising means to transfer the classified particles with a size equal to or higher than the cut-off size to the first separator; and/or
* the second and/or, optionally, the third collectors are the same collector.

14. The system according to any one of claims 11 to 13, further comprising a control loop comprising an analyser adapted to analyse the magnesium content in the fourth and/or, optionally, the seventh concentrate phosphate concentrate downstream the second and/or the third magnetic separator respectively, wherein the results of the analyser is used in a control loop for adjusting the magnetic field in the second and/or, optionally, the third magnetic separator.

15. The use of the system according to any one of claims 11 to 14 for performing the method according to any one of claims 1 to 10.
